(19) Europäisches Patentamt
European Patent Office
Office européen des brevets

(11) **EP 3 135 507 B1**

(12) **EUROPEAN PATENT SPECIFICATION**

(45) Date of publication and mention
of the grant of the patent:
**02.10.2019 Bulletin 2019/40**

(51) Int Cl.:
**B60C 17/00** (2006.01)          **B60C 9/20** (2006.01)
**B60C 9/30** (2006.01)

(21) Application number: **15783169.4**

(22) Date of filing: **06.02.2015**

(86) International application number:
**PCT/JP2015/053398**

(87) International publication number:
**WO 2015/162969 (29.10.2015 Gazette 2015/43)**

(54) **SIDE-REINFORCED RUN-FLAT RADIAL TIRE**

SEITENVERSTÄRKTER NOTLAUFREIFEN

PNEU RADIAL À AFFAISSEMENT LIMITÉ ET FLANCS RENFORCÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2014 JP 2014089567**

(43) Date of publication of application:
**01.03.2017 Bulletin 2017/09**

(73) Proprietor: **Bridgestone Corporation
Tokyo 104-8340 (JP)**

(72) Inventor: **OGAWA, Gaku
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 1 284 203          WO-A1-00/13923
JP-A- H10 138 720          JP-A- H10 151 917
US-A- 4 067 374            US-A- 4 365 659
US-A1- 2010 288 410        US-B1- 6 530 404**

• **Camskill Company: "SUV Tyres - 4x4 - All Terrain
Tyres", , 24 November 2012 (2012-11-24),
XP055508433, Retrieved from the Internet:
URL:https://web.archive.org/web/2012112406
5643/https://www.camskill.co.uk/m56b0s3841
p0/SUV_Tyres_-_4x4_Tyres_-_All_Terrain_Tyr
es_-_Off_Road_Tyres_-_17_inch_R17_inch_-_2
15_60_17_215_60R17 [retrieved on 2018-09-20]**

**Description**

Technical Field

The present invention relates to a side-reinforced run-flat radial tire.

Background Art

As a run-flat radial tire that makes it possible to safely travel a certain distance even in a state in which the internal pressure of the tire has gone down due to a puncture or the like, JP-A No. 2009-126262 discloses a side-reinforced run-flat radial tire having tire side portions reinforced by side-reinforcing rubber layers. Attention is also drawn to the disclosure of WO00/13923 and US4 365 659.

SUMMARY OF INVENTION

Technical Problem

In this connection, side-reinforced run-flat radial tires have mainly been tires of a size having a relatively small tire section height. The reason for this is, as the tire section height becomes larger, the amount of tire deformation when a slip angle is applied when the tire is run flat (run in a state in which the internal pressure has gone down due to a puncture or the like) increases, so the performance level required of the run-flat radial tire becomes more demanding.
Particularly when it comes to a side-reinforced run-flat radial tire having a high tire section height, it becomes easier for rim detachment to occur on the inner side of a vehicle turn.
The reason for this is considered to be that buckling occurring in the tire side portion on the inner side of a vehicle turn (a phenomenon where the tire side portion bends on the tire inner side) causes rim detachment on the inner side of the vehicle turn.
It is a problem of the present invention to improve rim detachment resistance even more in a side-reinforced run-flat radial tire.

Solution to Problem

A side-reinforced run-flat radial tire as claimed in claim 1.

Advantageous Effects of Invention

The run-flat radial tire of the present invention can improve rim detachment resistance.

BRIEF DESCRIPTION OF DRAWINGS

FIG. 1 is a tire half sectional view showing one side of a cross section obtained by cutting along a tire axial direction a run-flat radial tire pertaining to an embodiment.
FIG. 2 is a tire sectional view showing a cross section obtained by cutting along the tire axial direction the run-flat radial tire shown in FIG. 1 in a state in which a tire side portion has buckled.
FIG. 3 is a tire half sectional view showing one side of a cross section obtained by cutting along the tire axial direction a run-flat radial tire pertaining to an embodiment of the present invention.
FIG. 4 is an explanatory drawing describing the mechanism by which rim detachment occurs on the inner side of a vehicle turn pertaining to a comparative example.
FIG. 5 is graph showing the relationship between tire section height and rim detachment resistance in a run-flat tire.

DESCRIPTION OF EMBODIMENTS

Embodiments of the present invention will be described below on the basis of the drawings.

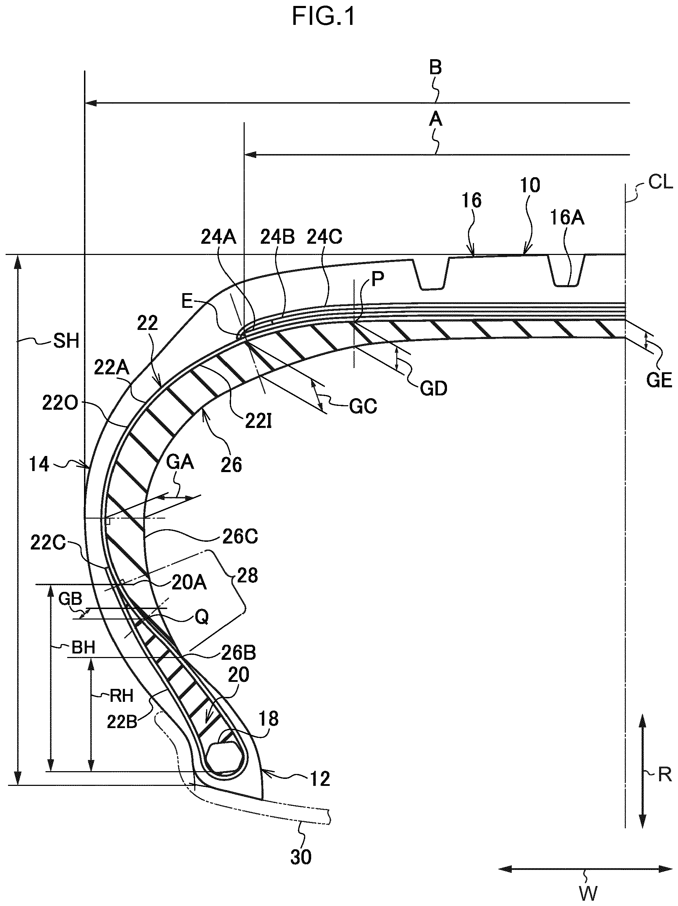

FIG. 1 shows one side of a cross section, along a tire axial direction, of a side-reinforced run-flat radial tire (hereinafter, simply called "the tire") 10 pertaining to an embodiment. It should be noted that arrow W in FIG. 1 indicates the axial direction of the tire 10 (hereinafter appropriately called "the tire axial direction"), arrow R indicates the radial direction of the tire 10 (hereinafter appropriately called "the tire radial direction"), and reference sign CL indicates the equatorial plane of the tire 10 (hereinafter appropriately called "the tire equatorial plane"). Furthermore, in the present embodiment, the axial (rotational axis) side of the tire 10 along the tire radial direction will be called the "tire radial direction inner side" and the opposite side of the axial side of the tire 10 along the tire radial direction will be called the "tire radial direction outer side." The equatorial plane CL side of the tire 10 along the tire axial direction will be called the "tire axial direction inner side" and the opposite side of the equatorial plane CL side of the tire 10 along the tire axial direction will be called the "tire axial direction outer side."

The tire 10 shown in FIG. 1 is depicted as mounted on a standard rim 30 (indicated by the long dashed double-short dashed line in FIG. 1) and inflated to a standard air pressure. The standard rim here is a rim prescribed in the 2013 Year Book of the Japan Automobile Tyre Manufacturers Association (JATMA). Furthermore, the standard air pressure is an air pressure corresponding to a maximum carrying capacity in the 2013 Year Book of the Japan Automobile Tyre Manufacturers Association (JATMA).

It should be noted that outside Japan the load is the maximum load (maximum carrying capacity) of a single wheel of an applied size in the standards cited below, the internal pressure is the air pressure corresponding to the maximum load (maximum carrying capacity) of a single wheel in the standards cited below, and the rim is a standard rim (or "approved rim" or "recommended rim") of an applied size in the standards cited below. The standards are determined by the industrial standards effective in the geographical region where the tire is produced or used. For example, in the United States of America the standards are prescribed in the Year Book of the Tire and Rim Association, Inc., in Europe the standards are prescribed in the Standards Manual of the European Tire and Rim Technical Organization, and in Japan the standards are prescribed in the JATMA Year Book of the Japan Automobile Tyre Manufacturers Association.

It should be noted that the tire 10 of the present embodiment is a tire having a tire section height equal to or greater than 115 mm, and is, for example, a tire having a tire section height of 129 mm.

As shown in FIG. 1, the run-flat radial tire 10 pertaining to the present embodiment has a pair of bead portions 12 (FIG. 1 shows only the bead portion 12 on one side), a pair of tire side portions 14 extending outward in the tire radial direction from the pair of bead portions 12, and a tread portion 16 extending from one tire side portion 14 to the other tire side portion 14. It should be noted that the tire side portions 14 bear the load acting on the tire 10 when the tire 10 is run flat.

Bead cores 18 are embedded in the pair of bead portions 12. A carcass 22 spans the pair of bead cores 18. The end portion sides of the carcass 22 are anchored to the bead cores 18. It should be noted that the end portion sides of the carcass 22 are turned up around the bead cores 18 from the inner side to the outer side of the tire and anchored, and end portions 22C of turn-up sections 22B are in contact with a carcass body portion 22A. Furthermore, the carcass 22 extends in a toroidal shape from one bead core 18 to the other bead core 18 to configure the skeleton of the tire.

A belt layer 24A and a belt layer 24B are layered from inner side in the tire radial direction on the tire radial direction outer side of the carcass body portion 22A. Furthermore, a cap layer 24C is layered thereon. The belt layer 24A and the belt layer 24B are belt layers having a typical configuration where a plurality of steel cords are lined up parallel to each other and coated with rubber. Furthermore, the steel cords of the belt layer 24A and the steel cords of the second belt layer 24B are arranged inclined in opposite directions with respect to the equatorial plane CL and intersect each other. It should be noted that in the present embodiment the belt layer 24A whose width in the tire axial direction is larger corresponds to a maximum width inclined belt layer of the present invention.

It should be noted that the width of the maximum width inclined belt layer (the belt layer 24A) in the tire axial direction is preferably from 90% to 115% of the tread width. Here, "tread width" refers to the tire axial direction width of the ground-contacting region under the maximum carrying load in a state in which the tire 10 has been mounted on the standard rim 30 and inflated to an internal pressure equal to the standard air pressure. Here, "maximum carrying load" is the maximum carrying load in the 2013 Year Book of the Japan Automobile Tyre Manufacturers Association (JATMA).

Embedded in the bead portions 12 are bead fillers 20 extending from the bead cores 18 outward in the tire radial direction along an outer surface 22O of the carcass 22. The bead fillers 20 are placed in the regions surrounded by the carcass body portion 22A and the turn-up sections 22B. Furthermore, the bead fillers 20 decrease in thickness heading outward in the tire radial direction, and tire radial direction outer side end portions 20A of the bead fillers 20 are positioned in the tire side portions 14.

Furthermore, as shown in FIG. 1, a height BH of the bead fillers 20 is preferably from 30% to 50% of a tire section height SH. In the present embodiment, BH is set to 42% of SH.

It should be noted that the "tire section height" here refers to a length equal to 1/2 of the difference between the tire outer diameter and the rim diameter in a no-load state as defined in the Year Book of the Japan Automobile Tyre Manufacturers Association (JATMA). Furthermore, the "height BH of the bead fillers" refers to a length measured along the tire radial direction from the lower ends (tire radial direction inner side end portions) of the bead cores 18 to the end portions 20A of the bead fillers 20 in a state in which the tire 10 has been mounted on the standard rim 30 and inflated to an internal pressure equal to the standard air pressure.

A side-reinforcing rubber layer 26 that reinforces the tire side portions 14 is disposed in the tire side portions 14 on the tire axial direction inner side of the carcass 22. The side-reinforcing rubber layer 26 extends along an inner surface 22I of the carcass 22, and extends from one tire side portion 14 to the other tire side portion 14 (not shown in the drawings), wherein a tire equatorial plane CL is sandwiched in between the one tire side portion 14 and the another tire side portion 14. Moreover, the side-reinforcing rubber layer 26 has a shape wherein its thickness decreases heading toward the bead core 18 sides and the tire equatorial plane CL side. It should be noted that the "thickness of the side-reinforcing rubber layer" here refers to a length measured along a normal line of the carcass 22 in a state in which the tire 10 has been mounted on the standard rim 30 and inflated to an internal pressure equal to the standard air pressure.

In the tread portion 16 the side-reinforcing rubber layer 26 is formed overlying the belt layer 24A with the carcass 22 (the carcass body portion 22A) sandwiched in between, and end portions 26B of the side-reinforcing rubber layer 26 on the bead core 18 sides overlie the bead fillers 20 with the carcass 22 sandwiched in between.

Furthermore, as shown in FIG. 1, a thickness GB of the side-reinforcing rubber layer 26 at midpoints Q between the end portions 20A of the bead fillers 20 and the end portions 26B of the side-reinforcing rubber layer 26 along the extension direction of the carcass 22 is preferably equal to or less than 50% of a thickness GA (which hereinafter is sometimes called "the maximum thickness GA") of the side-reinforcing rubber layer 26 at positions where the carcass 22 reaches its maximum width. In the present embodiment, GB is set to 30% of GA.

It should be noted that the "positions where the carcass reaches its maximum width" here refers to the positions where the carcass 22 becomes most outward in the tire axial direction.

Moreover, a thickness GC of the side-reinforcing rubber layer 26 at tire axial direction end portions E of the belt layer 24A that is the maximum width inclined belt layer is set equal to or greater than 70% of the maximum thickness GA. That is, GC satisfies the relational expression $GC \geq 0.7 \times GA$.

Moreover, a thickness GD of the side-reinforcing rubber layer 26 at positions P located a ratio of 14% of a width A of the belt layer 24A inward in the tire axial direction from the tire axial direction end portions E of the belt layer 24A is preferably equal to or greater than 30% of the maximum thickness GA. That is, GD satisfies the relational expression $GD/GA \geq 0.3$.

It should be noted that a thickness GE of the side-reinforcing rubber layer 26 at the equatorial plane CL is equal to or less than 60% of the thickness GA of the side-reinforcing rubber layer 26 at the positions where the carcass 22 reaches its maximum width. That is, GE satisfies the relational expression $GE \leq 0.6 \times GA$. Furthermore, the thickness of the side-reinforcing rubber layer 26 is formed so as to monotonously decrease (including a case where an identical thickness is continuous) from the tire axial direction end portions E toward the equatorial plane CL.

Furthermore, a tire radial direction distance RH between the lower ends (tire radial direction inner side end portions) of the bead cores 18 and the end portions 26B of the side-reinforcing rubber layer 26 is preferably from 50% to 80% of the bead filler height BH. The tire radial direction distance RH in the present embodiment is 65% of the bead filler height BH.

It should be noted that the "tire radial direction distance RH" refers to a length measured along the tire radial direction from the lower ends (tire radial direction inner side end portions) of the bead cores 18 to the end portions 26B of the side-reinforcing rubber layer 26 in a state in which the tire 10 has been mounted on the standard rim 30 and inflated to an internal pressure equal to the standard air pressure.

The side-reinforcing rubber layer 26 is reinforcement rubber for allowing the tire 10 to travel a predetermined distance while supporting the weight of the vehicle and its occupant(s) in a case where the internal pressure of the tire 10 has decreased due to a puncture or the like.

A plurality of circumferential direction grooves 16A extending in the tire circumferential direction are formed in the tread portion 16. An inner liner whose primary component is butyl rubber and which is not shown in the drawing is disposed on the inner surface of the tire 10 so as to range from one bead portion 12 to the other bead portion 12. It should be noted that the inner liner may also be one whose primary component is resin.

It should be noted that because the tire 10 has a high tire section height equal to or greater than 115 mm, a rim guard is not disposed in the present embodiment, but a rim guard may also be disposed.

Next, the action of the tire 10 of the present embodiment will be described.

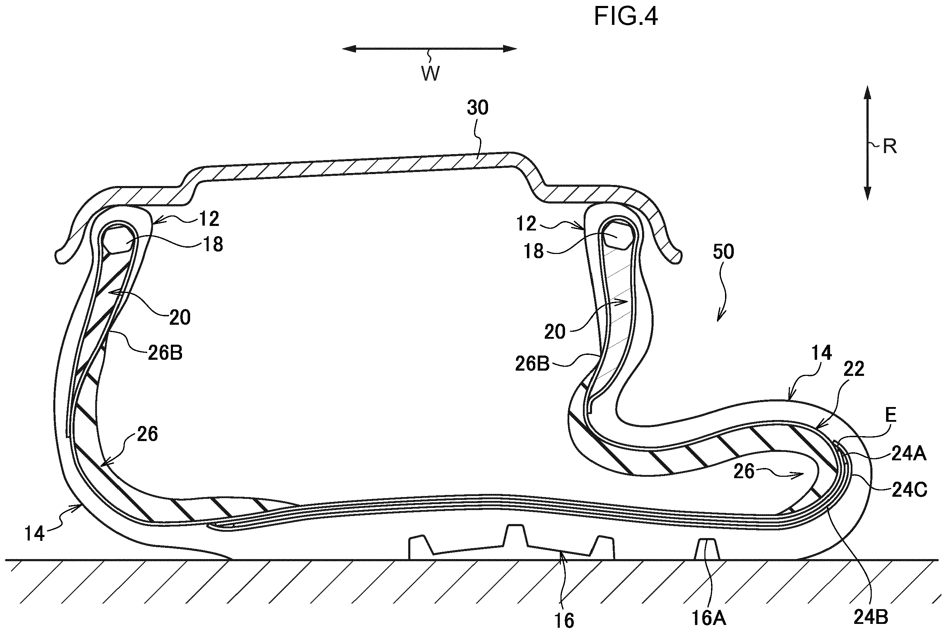

First, the mechanism of rim detachment in the tire 10 will be briefly described. Here, this will be described using as a comparative example a tire 50 (see FIG. 4) having the same configuration as that of the tire 10 except that the overlying width in the tire axial direction between the side-reinforcing rubber layer 26 and the belt layer 24A that is the maximum width inclined belt layer is 15% of the width A of the belt layer 24A. That is, in the tire pertaining to this comparative example, the side-reinforcing rubber layer 26 is not continuous across the equatorial plane CL. It should be noted that the same reference signs are assigned to constituent elements that are substantially the same as those of the tire 10.

As shown in FIG. 4, when a slip angle is applied to the tire 50 by a turn, for example, when the tire 50 is run flat, the ground-contacting section of the tire 50 collapses and its flexure amount increases. Additionally, the belt radius of the leading section of the tire 50 increases. As a result, tensile force on the tire radial direction outer side of the bead portion 12 positioned on the inner side of the turn becomes larger at the leading position. Additionally, sometimes, in combination with buckling that occurs at the leading position of the tire side portion 14 positioned on the inner side of the vehicle turn, the bead portion 12 becomes unseated from the standard rim 30 (rim detachment).

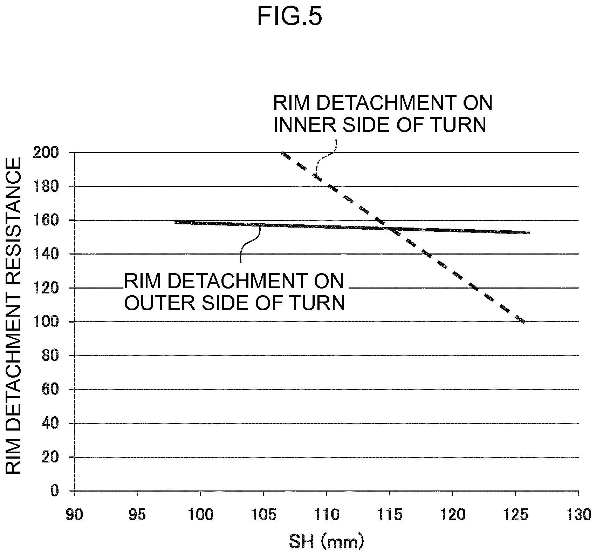

In this connection, as shown in FIG. 5, it was verified that rim detachment on the inner side of a vehicle turn easily occurs in a tire having a tire section height SH equal to or greater than 115 mm. The graph shown in FIG. 5 was obtained by investigating rim detachment resistance with respect to tire section height SH using run-flat radial tires having a tire width of 215 and different tire section heights SH. Additionally, the graph shows that the larger the numerical value of the rim detachment index is, the more difficult it is for rim detachment to occur. According to FIG. 5, in the case of a tire having a tire section height SH smaller than 115 mm, it is easier for rim detachment to occur on the outer side of a tire turn. Furthermore, it is understood that controlling rim detachment on the inner side of a turn is important in a tire having a tire section height SH equal to or greater than 115 mm. It should be noted that the tire section height specifically is equal to or less than 250 mm and particularly is equal to or less than 155 mm.

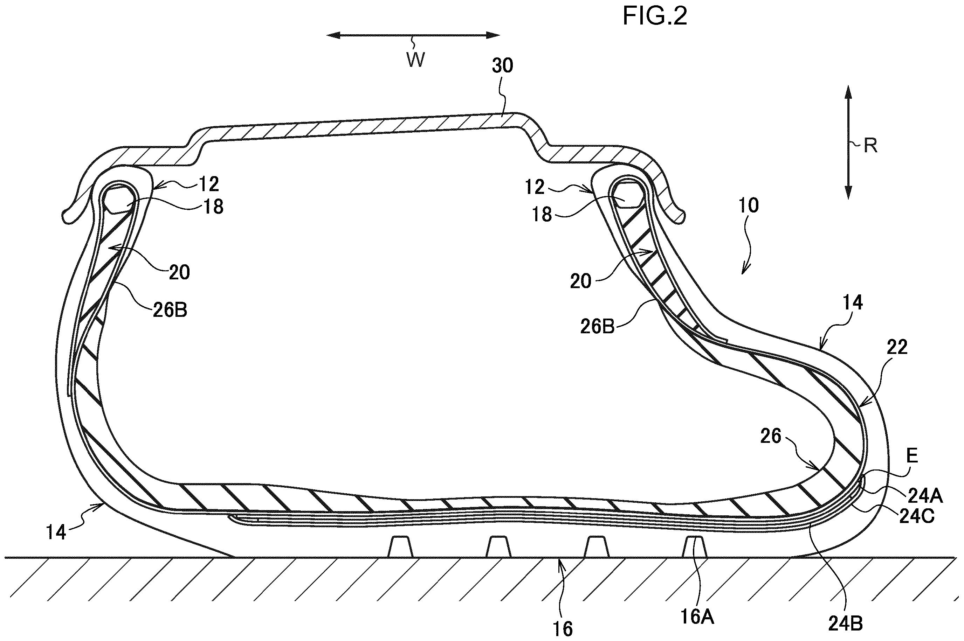

However, in the tire 10 pertaining to the present embodiment, the side-reinforcing rubber layer 26 is formed continuously from one tire side portion 14 to the other tire side portion, wherein a tire equatorial plane CL is sandwiched in between the one tire side portion and the another tire side portion (see FIG. 1). That is, the side-reinforcing rubber layer 26 and the belt layer 24A overlie each other in the entire tread width region. Consequently, even in a case where a slip angle is applied when the tire 10 is run flat, bending in the neighborhoods of the positions P of the belt layer 24A is controlled (see FIG. 2). Consequently, the occurrence of buckling in the tire side portions 14 is controlled, and an improvement of rim detachment resistance can be achieved.

Furthermore, the thickness GE of the side-reinforcing rubber layer 26 at the position of the tire equatorial plane CL is kept equal to or less than 60% of the thickness GA at the positions where the carcass reaches its maximum width. Because of this, controlling an increase in the tire weight can be achieved while improving rim detachment resistance.

It should be noted that it is easy for buckling to occur in the tire side portions 14 of a tire having a tire section height equal to or greater than 115 mm like the tire 10 of the present embodiment. For this reason, with respect to the tire 10 having a tire section height equal to or greater than 115 mm, the side-reinforcing rubber layer 26 overlies the belt layer 24A in the entire tread width region, so buckling of the tire side portions 14 can be effectively controlled.

Furthermore, in the tire 10, the thickness GC of the side-reinforcing rubber layer 26 at the tire axial direction end portions E of the belt layer 24A that is the maximum width inclined belt layer is set equal to or greater than 70% of the maximum thickness GA. For this reason, bending stiffness in the neighborhoods of the tire axial direction end portions E of the belt layer 24A can be particularly improved, and rim detachment resistance can be improved even more.

Moreover, provided that the tire axial direction width A of the maximum width inclined belt layer (the belt layer 24A) is equal to or greater than 80% of a tire section width B, bending stiffness is improved and bending can be controlled in an even wider range of the tread portion 16. Additionally, buckling of the tire side portions 14 can be controlled so that rim detachment resistance can be improved.

In this case, by widening outward the overlying width between the side-reinforcing rubber layer 26 and the belt layer 24A in the tire axial direction, buckling of the side portions can be controlled even more.

Moreover, the thickness GD of the side-reinforcing rubber layer 26 at the positions P located a ratio of 14% of the width A of the belt layer 24A inward in the tire axial direction from the tire axial direction end portions E of the belt layer 24A is equal to or greater than 30% of the maximum thickness GA. By forming the side-reinforcing rubber layer 26 in this way, the bending stiffness of the regions including the positions P that are sections that easily bend in a buckling situation becomes sufficiently greater, so that the occurrence of buckling can be controlled even more and rim detachment resistance can be improved even more.

Furthermore, in the tire 10, the end portions 26B of the side-reinforcing rubber layer 26 overlie the bead fillers 20 with the carcass 22 sandwiched in between, so the bending stiffness of the tire side portions 14 increases and run-flat durability is improved.

Moreover, in the tire 10, the height BH of the bead fillers 20 is set to 42% (from 30% to 50%) of the tire section height SH, so a balance between riding comfort and run-flat durability can be achieved. That is, in a case where the height BH of the bead fillers 20 is less than 30% of the tire section height SH, the stiffness of the bead portions 12 is low and it is easy for the bead portions 12 to become deformed. For this reason, it is easy for tire damage and so forth to occur, and run-flat durability is reduced. On the other hand, in a case where the height BH of the bead fillers 20 exceeds 50% of the tire section height SH, the stiffness of the bead portions 12 becomes too high, so riding comfort is reduced.

Moreover, in the tire 10, the thickness of the side-reinforcing rubber layer 26 decreases heading toward the bead core 18 sides and the tire equatorial plane CL side. Furthermore, the thickness GB of the side-reinforcing rubber layer 26 at the midpoints Q of overlying sections 28 is set to 30% (equal to or less than 50%) of the thickness GA of the side-reinforcing rubber layer 26 at the positions where the carcass 22 reaches its maximum width. For this reason, damage to the side-reinforcing rubber layer 26 is controlled even in a case where side buckling has occurred. The reason for this is, at the midpoints Q of the overlying sections 28, the distance from the carcass 22 to an inner surface 26C of the side-reinforcing rubber layer 26 becomes shorter. That is, this is because tensile stress acting on the inner surface 26C becomes lower.

Furthermore, in the tire 10, the tire radial direction distance RH between the lower ends (tire radial direction inner side end portions) of the bead cores 18 and the end portions 26B of the side-reinforcing rubber layer 26 is set to 65% (from 50% to 80%) of the bead filler height BH. Because of this, a balance between riding comfort and run-flat durability can be achieved. That is, when the tire radial direction distance RH is less than 50% of the height BH, the stiffness of the bead portions 12 becomes too high and riding comfort is reduced. On the other hand, when the tire radial direction distance RH exceeds 80% of the height BH, run-flat durability is reduced due to a reduction in the stiffness of the bead portions 12.

In the present embodiment, the tire 10 is given a configuration where the end portion sides of the carcass 22 are turned up around the bead cores 18 from inner side to outer side in the tire axial direction and the end portions of the carcass 22 are anchored to the bead cores 18, but the present invention is not limited to this configuration. For example, the tire 10 may also be given a configuration where the bead cores 18 are halved and the end portion sides of the carcass 22 are sandwiched by the halved bead cores 18 to thereby anchor the end portions of the carcass 22 in the bead cores 18.

Furthermore, in the present embodiment, the side-reinforcing rubber layer 26 is configured by one type of rubber, but the side-reinforcing rubber layer 26 may also contain fillers, staple fiber, resin, etc. provided that rubber is its primary component.

Moreover, the side-reinforcing rubber layer 26 may also be configured by multiple types of rubber. For example, the side-reinforcing rubber layer 26 may also be given a configuration where different multiple types of rubber are overlaid on each other in the tire radial direction or the tire axial direction. It should be noted that the effects of the present invention can be obtained even in a case where the side-reinforcing rubber layer 26 is given a configuration where different multiple types of rubber are overlaid on each other in the tire radial direction. That is, the effects of the present invention can be obtained provided that the side-reinforcing rubber layer 26 extends from one tire side portion 14 to the other tire side portion, wherein a tire equatorial plane CL is sandwiched in between the one tire side portion and the another tire side portion, and the thickness of the side-reinforcing rubber layer 26 in which multiple types of rubber are overlaid on each other satisfies a predetermined relationship ($GE \leq 0.6 \times GA$).

It should be noted that another material may also be used instead of the rubber of the side-reinforcing rubber layer 26 of the present embodiment. For example, it is conceivable to use a thermoplastic resin.

Moreover, in a case where the carcass 22 comprises plural layers, the side-reinforcing rubber layer 26 may also be disposed between the layers of the carcass 22 and between the carcass 22 and the inner liner.

[Other Embodiments]

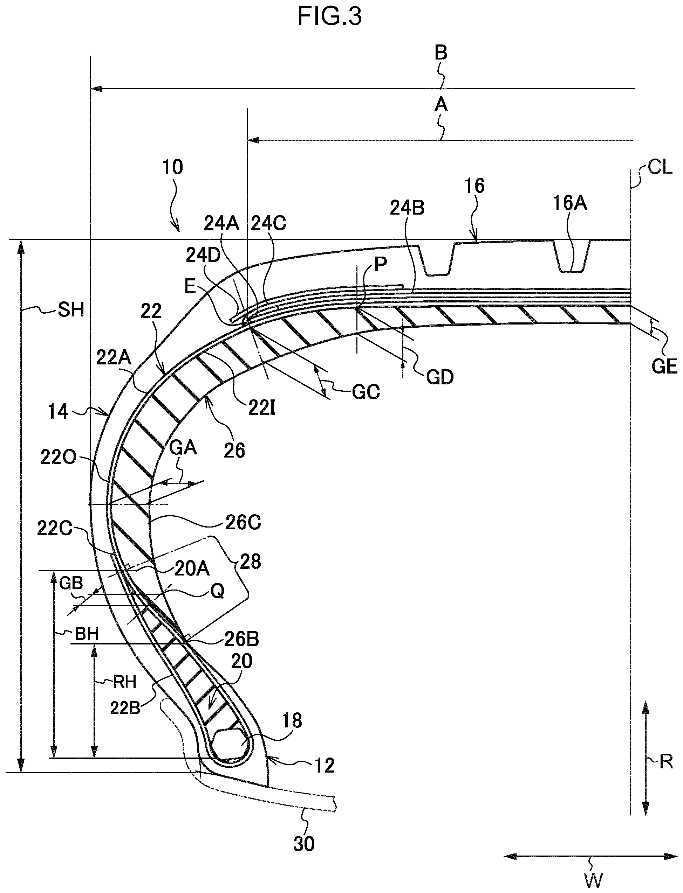

As shown in FIG. 3, reinforcement cord layers 24D are disposed on the upper portion of the cap layer 24C on the tire radial direction outer side of the carcass 22. The cords configuring the reinforcement cord layers 24D are disposed inclined in the range of 60° to 90° with respect to the tire circumferential direction. By adding the reinforcement cord layers 24D, bending stiffness in the neighborhoods of the positions P located a ratio of 14% of the width A of the belt layer 24A inward in the tire axial direction from the tire axial direction end portions E of the belt layer 24A and so forth is further improved, and buckling of the tire side portions 14 can be controlled even more.

It should be noted that the above-described effects increase when the reinforcement cord layers comprise plural layers, but because the tire weight increases, in the present embodiment the reinforcement cord layer comprise a single layer.

Furthermore, although the rubber material of the tire side portions 14 on the tire axial direction outer side of the carcass 22 is not specified in the present embodiment, it can include rubber having the physical properties that its JIS hardness (20 °C) is from 70 to 85 and its loss factor tan$\delta$ (60 °C) is equal to or less than 0.10, for example.

Embodiments of the present invention have been described above, but the present invention is not limited to these embodiments and can of course be implemented in a variety of ways without departing from the scope of the present invention.

(Test Examples)

In order to verify the effects of the present invention, eight types of run-flat radial tires (hereinafter simply called tires) included in the present invention (working examples 1 to 8 below) and two types of run-flat radial tires of comparative examples not included in the present invention (comparative examples 1 and 2 below) were prepared and the following test was carried out.

First, the run-flat radial tires of working examples 1 to 8 and the run-flat radial tires of comparative examples 1 and 2 used in the test will be described. It should be noted that the sizes of the run-flat radial tires used in the test were all 215/60R17 and that the tire section heights were 129 mm.

The run-flat radial tires of working examples 1 to 8 all employed the same structure as the structure of the tire 10 of the aforementioned embodiment; the run-flat radial tires of working examples 1 to 4 were tires in which the values of the "thickness GC of the side-reinforcing rubber layer at the maximum inclined belt end portions" were the same but the values of the "thickness GE of the side-reinforcing rubber layer at the equatorial plane" and the "thickness GD of the side-reinforcing rubber layer at the positions P located a ratio of 14% of the width A of the maximum width inclined belt inward in the tire axial direction from the maximum width inclined belt end portions" were different.

Furthermore, the run-flat radial tires of working examples 5 to 8 were tires in which the value of the "thickness GE of the side-reinforcing rubber layer at the equatorial plane" were the same but the values of the "thickness GC of the side-reinforcing rubber layer at the maximum inclined belt end portions" and the "thickness GD of the side-reinforcing rubber layer at the positions P located a ratio of 14% of the width A of the maximum width inclined belt inward in the tire axial direction from the maximum width inclined belt end portions" were different.

Moreover, the run-flat radial tire of comparative example 1 was a tire having substantially the same structure as that of the run-flat radial tires of working examples 1 to 8 but the side-reinforcing rubber layer was not continuous at the equatorial plane CL.

Moreover, the run-flat radial tire of comparative example 2 was a tire having substantially the same structure as that of the run-flat radial tires of working examples 1 to 8 but the ratio (GE/GA) of the "thickness GE of the side-reinforcing rubber layer 26 at the tire equatorial plane CL" to the "thickness GA at the positions where the carcass reaches its maximum width" was outer side the range of the present invention. The various numerical values of working examples 1 to 8 and comparative examples 1 and 2 are as shown in table 1 and table 2.

In the test, first, the test tire was mounted on a standard rim meeting JATMA standards, the test tire mounted on the standard rim was put on a vehicle without being inflated with air (with the internal pressure being 0 kPa), and the test tire was acclimated and run a distance of 5 km at a speed of 20 km/h. Then, a test in which the vehicle entered at a predetermined speed a circular road having a radius of curvature of 25 m and stopped at a position located at 1/3 the circumference of the circular road was performed two times consecutively (a J-turn test). This J-turn test was carried out increasing the entry speed 2 km/h, and the turning acceleration when the bead portion became unseated from the rim (a bump on the rim) was measured.

Here, using as a reference value (100) the turning acceleration when the bead portion of comparative example 1 became unseated from the rim, the turning accelerations when the bead portions of working examples 1 to 8 and comparative example 2 became unseated from the rim were expressed as indexes and evaluated. It should be noted that "rim detachment resistance" in tables 1 and 2 represent by way of an index the turning acceleration when the bead portion became unseated from the rim. Furthermore, the larger the numerical value of rim detachment resistance is, the better the result was.

[Table 1]

| | | Comparative Example 1 | Comparative Example 2 | Working Example 1 | Working Example 2 | Working Example 3 | Working Example 4 |
|---|---|---|---|---|---|---|---|
| Tread Width | | 170 | 170 | 170 | 170 | 170 | 170 |
| Maximum Width Inclined Belt Layer | Width (A) | 160 | 160 | 160 | 160 | 160 | 160 |

(continued)

| | | Comparative Example 1 | Comparative Example 2 | Working Example 1 | Working Example 2 | Working Example 3 | Working Example 4 |
|---|---|---|---|---|---|---|---|
| Side-reinforcing Rubber Layer | Continuous at Equatorial Plane? | NO | YES | YES | YES | YES | YES |
| | Thickness (GA) at Carcass Maximum Width Positions | 9 | 9 | 9 | 9 | 9 | 9 |
| | Thickness (GE) at Equatorial Plane | 0 | 6.3 | 5.4 | 4.5 | 2.7 | 1.8 |
| | Thickness (GC) at Maximum Width Inclined Belt Layer End Portions | 4 | 6.5 | 6.5 | 6.5 | 6.5 | 6.5 |
| | Thickness (GD) at Positions Located Ratio of 14% of Belt Width Inward from Maximum Width Inclined Belt Layer End Portions | 0 | 6.3 | 5.4 | 4.5 | 4.5 | 4.5 |
| | GE/GA | 0 | 70% | 60% | 50% | 30% | 20% |
| | GC/GA | 44% | 72% | 72% | 72% | 72% | 72% |
| | GD/GA | 0% | 70% | 60% | 50% | 50% | 50% |
| Results | Rim Detachment Resistance | 100 | 140 | 139 | 137 | 134 | 130 |
| | Tire Weight | 100 | 116 | 114 | 112 | 109 | 107 |

As shown in table 1, it was verified that in working examples 1 to 4 rim detachment resistance was improved compared to comparative example 1 because the side-reinforcing rubber layer 26 was formed continuously from one tire side portion 14 to the other tire side portion 14, wherein a tire equatorial plane CL is sandwiched in between the one tire side portion and the another tire side portion.

Furthermore, it was verified that because the thickness GE of the side-reinforcing rubber layer 26 at the tire equatorial plane CL is made equal to or less than 60% of the thickness GA at the positions where the carcass reaches its maximum width, a predetermined rim detachment resistance can be ensured while controlling the tire weight over comparative example 2.

[Table 2]

| | | Comparative Example 1 | Comparative Example 2 | Working Example 5 | Working Example 6 | Working Example 7 | Working Example 8 |
|---|---|---|---|---|---|---|---|
| Tread Width | | 170 | 170 | 170 | 170 | 170 | 170 |

(continued)

| | | Comparative Example 1 | Comparative Example 2 | Working Example 5 | Working Example 6 | Working Example 7 | Working Example 8 |
|---|---|---|---|---|---|---|---|
| Maximum Width Inclined Belt Layer | Width (A) | 160 | 160 | 160 | 160 | 160 | 160 |
| Side-reinforcing Rubber Layer | Continuous at Equatorial Plane? | NO | YES | YES | YES | YES | YES |
| | Thickness (GA) at Carcass Maximum Width Positions | 9 | 9 | 9 | 9 | 9 | 9 |
| | Thickness (GE) at Equatorial Plane | 0 | 6.3 | 2.7 | 2.7 | 2.7 | 2.7 |
| | Thickness (GC) at Maximum Width Inclined Belt Layer End Portions | 4 | 6.5 | 5.6 | 6.0 | 6.5 | 6.9 |
| | Thickness (GD) at Positions Located Ratio of 14% of Belt Width Inward from Maximum Width Inclined Belt Layer End Portions | 0 | 6.3 | 3.6 | 4.0 | 4.5 | 4.9 |
| | GE/GA | 0% | 70% | 30% | 30% | 30% | 30% |
| | GC/GA | 44% | 72% | 62% | 67% | 72% | 77% |
| | GD/GA | 0% | 70% | 45% | 49% | 50% | 56% |
| Results | Rim Detachment Resistance | 100 | 140 | 122 | 127 | 134 | 136 |
| | Tire Weight | 100 | 116 | 107 | 108 | 109 | 110 |

As shown in table 2, it was verified that rim detachment resistance was improved even more the greater became the ratio (GC/GA) of the thickness GC of the side-reinforcing rubber layer 26 at the tire axial direction end portions of the belt layer 24A that is the maximum width inclined belt layer to the thickness GA of the side-reinforcing rubber layer 26 at the positions where the carcass reaches its maximum width. In particular, it was verified that good rim detachment resistance is obtained when GC/GA is equal to or greater than 70%.

Furthermore, in working examples 5 to 8, in the run-flat radial tires, it was verified that rim detachment resistance was improved the greater became the ratio (GD/GA) of the thickness GD of the side-reinforcing rubber layer 26 at the positions P located a ratio of 14% of the width A of the belt layer 24A inward in the tire axial direction from the tire axial direction end portions of the belt layer 24A that is the maximum width inclined belt layer to the thickness GA of the side-reinforcing rubber layer 26 at the positions where the carcass reaches its maximum width. In particular, it was verified that good rim detachment resistance is obtained when GD/GA is equal to or greater than 30%.

The disclosure of Japanese Patent Application No. 2014-089567 filed on April 23, 2014 is incorporated in its entirety by reference herein.

All documents, patent applications, and technical standards mentioned in this specification are incorporated by reference herein to the same extent as if each individual document, patent application, or technical standard were specifically and individually indicated to be incorporated by reference.

**Claims**

1. A side-reinforced run-flat radial tire (10) comprising:

   a carcass (22) spanning a pair of bead portions (12); and
   a side-reinforcing rubber layer (26) extending along an inner surface of the carcass from one tire side portion (14) to another tire side portion (14), wherein a tire equatorial plane (CL) is sandwiched in between the one tire side portion and the another tire side portion,
   wherein the side-reinforced run-flat radial tire satisfies relational expression (1) below and has a tire section height equal to or greater than 115 mm

$$GE \leq 0.6 \times GA \qquad \cdots (1)$$

   wherein GE is a thickness of the side-reinforcing rubber layer at a position of the tire equatorial plane;
   wherein GA is a thickness of the side-reinforcing rubber layer at positions where the carcass reaches its maximum width,
   **characterised in that**:

   (i) reinforcement cord layers (24D) are disposed on an upper portion of a cap layer (24C) on a tire radial direction outer side of a belt layer (24A) only at an axial direction end portion of the cap layer (24C);
   (ii) cords configuring the reinforcement cord layers (24D) are disposed inclined in a range of from 60° to 90° with respect to a tire circumferential direction; and
   (iii) an axial direction outer side end portion of the reinforcement cord layers (24D) is disposed further toward an outer side than an axial direction outer side end portion of the belt layer (24A).

2. The side-reinforced run-flat radial tire according to claim 1, wherein the belt layer (24A) is a maximum width inclined belt layer (24A) whose width (A) in a tire axial direction is largest among at least one inclined belt layer disposed on a tire radial direction outer side of the carcass and having cords extending in a direction inclined with respect to a tire circumferential direction, wherein the side-reinforced run-flat radial tire satisfies relational expression (2) below

$$GC \geq 0.7 \times GA \qquad \cdots (2)$$

   wherein GC is a thickness of the side-reinforcing rubber layer at positions of tire axial direction end portions of the maximum width inclined belt layer.

3. The side-reinforced run-flat radial tire according to claim 1, wherein the belt layer (14A) is a maximum width inclined belt layer (24A) whose width (A) in a tire axial direction is largest among at least one inclined belt layer disposed on a tire radial direction outer side of the carcass and having cords extending in a direction inclined with respect to a tire circumferential direction, wherein the side-reinforced run-flat radial tire satisfies relational expression (3) below

$$GD/GA \geq 0.3 \qquad \cdots (3)$$

   wherein GD is a thickness of the side-reinforcing rubber layer at positions located 14% of a width of the maximum width inclined belt layer inward in the tire axial direction from tire axial direction end portions of the maximum width inclined belt layer.

4. The side-reinforced run-flat radial tire according to claim 2, wherein the side-reinforced run-flat radial tire satisfies relational expression (3) below

$$GD/GA \geq 0.3 \qquad \cdots (3)$$

wherein GD is a thickness of the side-reinforcing rubber layer at positions located 14% of a width of the maximum width inclined belt layer_inward in the tire axial direction from tire axial direction end portions of the maximum width inclined belt layer.

**Patentansprüche**

1. Seitenverstärkter Radial-Notlaufreifen (10), Folgendes beinhaltend:

   eine Karkasse (22), welche ein Paar Wulstabschnitte (12) umspannt; und
   eine seitenverstärkende Kautschukschicht (26), welche sich entlang einer inneren Fläche der Karkasse von einem Reifenseitenabschnitt (14) zu einem anderen Reifenseitenabschnitt (14) erstreckt, wobei eine Reifenäquatorebene (CL) sandwichartig zwischen dem einen Reifenseitenabschnitt und dem anderen Reifenseitenabschnitt angeordnet ist,
   wobei der seitenverstärkte Radial-Notlaufreifen den nachstehenden Vergleichsausdruck (1) erfüllt und eine Reifenquerschnittshöhe besitzt, welche gleich 115 mm oder darüber beträgt

$$GE \leq 0.6 \text{ x } GA \qquad (1)$$

   wobei GE eine Dicke der seitenverstärkenden Kautschukschicht an Positionen der Reifenäquatorebene ist;
   wobei GA eine Dicke der seitenverstärkenden Kautschukschicht an Positionen ist, an welcher die Karkasse ihre maximale Breite erreicht,
   **dadurch gekennzeichnet, dass**:

   (i) Verstärkungs-Kordschichten (24D) an einem oberen Abschnitt einer Kappenschicht (24C) an einer Reifenradialrichtungs-Außenseite einer Gürtelschicht (24A) nur an einem Axialrichtungs-Endabschnitt der Kappenschicht (24C) angeordnet sind;
   (ii) Kords, welche die Verstärkungs-Kordschichten (24D) konfigurieren, geneigt in einem Bereich von 60° bis 90° in Bezug auf eine Reifenumfangsrichtung angeordnet sind; und
   (iii) ein Axialrichtungs-Außenseiten-Endabschnitt der Verstärkung-Kordschichten (24D) weiter in Richtung einer Außenseite als ein Axialrichtungs-Außenseiten-Endabschnitt der Gürtelschicht (24A) angeordnet ist.

2. Seitenverstärkter Radial-Notlaufreifen nach Anspruch 1, bei welchem die Gürtelschicht (24A) eine geneigte Gürtelschicht (24A) mit maximaler Breite ist, deren Breite (A) in einer Reifenaxialrichtung die größte unter mindestens einer geneigten Gürtelschicht ist, welche an einer Reifenradialrichtungs-Außenseite der Karkasse angeordnet ist und Kords besitzt, welche sich in eine Richtung erstrecken, welche in Bezug auf eine Reifenumfangsrichtung geneigt ist, wobei der seitenverstärkte Radial-Notlaufreifen den nachstehenden Vergleichsausdruck (2) erfüllt:

$$GC \geq 0.7 \text{ x } GA \qquad (2)$$

   wobei GC eine Dicke der seitenverstärkenden Kautschukschicht an Positionen von Reifenaxialrichtungs-Endabschnitten der geneigten Gürtelschicht mit der maximalen Breite ist.

3. Seitenverstärkter Radial-Notlaufreifen nach Anspruch 1, bei welchem die Gürtelschicht (14A) eine geneigte Gürtelschicht (24A) mit maximaler Breite ist, deren Breite (A) in einer Reifenaxialrichtung die größte unter mindestens einer geneigten Gürtelschicht ist, welche an einer Reifenradialrichtungs-Außenseite der Karkasse angeordnet ist und Kords besitzt, welche sich in eine Richtung erstrecken, welche in Bezug auf eine Reifenumfangsrichtung geneigt ist, wobei der seitenverstärkte Radial-Notlaufreifen den nachstehenden Vergleichsausdruck (3) erfüllt:

$$GD/GA \geq 0.3 \qquad (3)$$

**EP 3 135 507 B1**

wobei GD eine Dicke der seitenverstärkenden Kautschukschicht an Positionen ist, welche um 14 % von einer Breite der geneigten Gürtelschicht mit maximaler Breite einwärts in der Reifenaxialrichtung von den Reifenaxialrichtungs-Endabschnitten der geneigten Gürtelschicht mit maximaler Breite befindlich sind.

4. Seitenverstärkter Radial-Notlaufreifen nach Anspruch 2, bei welchem der seitenverstärkte Radial-Notlaufreifen den nachstehenden Vergleichsausdruck (3) erfüllt

$$GD/GA \geq 0.3 \qquad (3)$$

wobei GD eine Dicke der seitenverstärkenden Kautschukschicht an Positionen ist, welche um 14 % von einer Breite der geneigten Gürtelschicht mit maximaler Breite einwärts in der Reifenaxialrichtung von den Reifenaxialrichtungs-Endabschnitten der geneigten Gürtelschicht mit maximaler Breite befindlich sind.

**Revendications**

1. Pneumatique radial à affaissement limité renforcé latéralement (10) comprenant :

une carcasse (22) qui recouvre une paire de sections de talon (12) ; et
une couche de caoutchouc de renforcement latéral (26) qui s'étend le long d'une surface interne de la carcasse depuis une section latérale de pneumatique (14) jusqu'à une autre section latérale de pneumatique (14), dans lequel un plan équatorial de pneumatique (CL) est pris en sandwich entre la section latérale de pneumatique considérée en premier et l'autre section latérale de pneumatique ;
dans lequel le pneumatique radial à affaissement limité renforcé latéralement satisfait l'expression relationnelle (1) ci-dessous et présente une hauteur de section de pneumatique qui est égale ou supérieure à 115 mm :

$$GE \leq 0,6 \text{ x } GA \qquad (1)$$

dans laquelle GE est une épaisseur de la couche de caoutchouc de renforcement latéral au niveau d'une position du plan équatorial de pneumatique ; et
dans laquelle GA est une épaisseur de la couche de caoutchouc de renforcement latéral au niveau de positions au niveau desquelles la carcasse atteint sa largeur maximum ;
**caractérisé en ce que** :

(i) des couches de câble de renforcement (24D) sont disposées sur une section supérieure d'une couche de recouvrement (24C) sur un côté externe de direction radiale de pneumatique d'une couche de ceinture (24A) seulement au niveau d'une section d'extrémité de direction axiale de la couche de recouvrement (24C) ;
(ii) des câbles qui configurent les couches de câble de renforcement (24D) sont disposés de telle sorte qu'ils soient inclinés dans une plage de 60° à 90° par rapport à une direction circonférentielle de pneumatique ; et
(iii) une section d'extrémité de côté externe de direction axiale des couches de câble de renforcement (24D) est disposée davantage en direction d'un côté externe que ne l'est une section d'extrémité de côté externe de direction axiale de la couche de ceinture (24A).

2. Pneumatique radial à affaissement limité renforcé latéralement selon la revendication 1, dans lequel la couche de ceinture (24A) est une couche de ceinture inclinée (24A) de largeur maximum dont la largeur (A) dans une direction axiale de pneumatique est la plus grande parmi au moins une couche de ceinture inclinée qui est disposée sur un côté externe de direction radiale de pneumatique de la carcasse et qui comporte des câbles qui s'étendent dans une direction qui est inclinée par rapport à une direction circonférentielle de pneumatique, dans lequel le pneumatique radial à affaissement limité renforcé latéralement satisfait l'expression relationnelle (2) ci-dessous :

$$GC \geq 0,7 \text{ x } GA \qquad (2)$$

dans laquelle GC est une épaisseur de la couche de caoutchouc de renforcement latéral au niveau de positions de sections d'extrémité de direction axiale de pneumatique de la couche de ceinture inclinée de largeur maximum.

3. Pneumatique radial à affaissement limité renforcé latéralement selon la revendication 1, dans lequel la couche de ceinture (14A) est une couche de ceinture inclinée de largeur maximum (24A) dont la largeur (A) dans une direction axiale de pneumatique est la plus grande parmi au moins une couche de ceinture inclinée qui est disposée sur un côté externe de direction radiale de pneumatique de la carcasse et qui comporte des câbles qui s'étendent dans une direction qui est inclinée par rapport à une direction circonférentielle de pneumatique, dans lequel le pneumatique radial à affaissement limité renforcé latéralement satisfait l'expression relationnelle (3) ci-dessous :

$$GD/GA \geq 0{,}3 \qquad (3)$$

dans laquelle GD est une épaisseur de la couche de caoutchouc de renforcement latéral au niveau de positions qui sont localisées à 14 % d'une largeur de la couche de ceinture inclinée de largeur maximum vers l'intérieur dans la direction axiale de pneumatique par rapport à des sections d'extrémité de direction axiale de pneumatique de la couche de ceinture inclinée de largeur maximum.

4. Pneumatique radial à affaissement limité renforcé latéralement selon la revendication 2, dans lequel le pneumatique radial à affaissement limité renforcé latéralement satisfait l'expression relationnelle (3) ci-dessous :

$$GD/GA \geq 0{,}3 \qquad (3)$$

dans laquelle GD est une épaisseur de la couche de caoutchouc de renforcement latéral au niveau de positions qui sont localisées à 14 % d'une largeur de la couche de ceinture inclinée de largeur maximum vers l'intérieur dans la direction axiale de pneumatique par rapport à des sections d'extrémité de direction axiale de pneumatique de la couche de ceinture inclinée de largeur maximum.

# FIG.1

FIG.2

# FIG.3

FIG.4

EP 3 135 507 B1

# FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009126262 A
- WO 0013923 A
- US 4365659 A
- JP 2014089567 A